# EUROPÄISCHE PATENTSCHRIFT

(11) **EP 2 996 909 B1**
(45) Veröffentlichungstag und Bekanntmachung des Hinweises auf die Patenterteilung: **03.05.2017**
(21) Anmeldenummer: 14710811.2
(22) Anmeldetag: 15.03.2014
(51) Int. Cl.: B60R 25/021

(54) **LENKRADSCHLOSS**
STEERING WHEEL LOCK
ANTIVOL DE DIRECTION

(30) Priorität: 15.05.2013 DE 102013104991
(43) Veröffentlichungstag der Anmeldung: 23.03.2016
(73) Patentinhaber: ThyssenKrupp Presta Aktiengesellschaft, 9492 Eschen (LI)
(72) Erfinder: FRICKE, Sascha, CH-9450 Altstätten (CH); GEISELBERGER, Thomas, 9485 Nendeln (LI); FLEISCHER, Martin, CH-9436 Balgach (CH); GANAHL, Johannes, A-6780 Schruns (AT)
(74) Vertreter: ThyssenKrupp Intellectual Property GmbH
(86) Internationale Anmeldenummer: PCT/EP2014/000695
(87) Internationale Veröffentlichungsnummer: WO 2014/183817

(56) Entgegenhaltungen:
- DE-A1- 1 800 883
- DE-B4- 10 262 210
- FR-A1- 2 615 892
- US-A1- 2006 021 402

## Beschreibung

Die vorliegende Erfindung betrifft ein Lenkradschloss mit einer Schlüsselaufnahme, in die ein Schlüssel in einer Einsteckrichtung einsteckbar ist, und mit zumindest einem, durch Einstecken des Schlüssels in der Einsteckrichtung in die Schlüsselaufnahme betätigbaren elektrischen Schalter und mit zumindest einer, mittels des in die Schlüsselaufnahme eingesteckten Schlüssels betätigbaren Blockiervorrichtung zum Blockieren einer Lenkspindel, wobei der elektrische Schalter ein in zumindest einer Schaltrichtung verschiebbares Schaltelement aufweist, wobei die Einsteckrichtung und die Schaltrichtung abgewinkelt zueinander angeordnet sind.

Lenkradschlösser sind beim Stand der Technik in zahlreichen Ausgestaltungsformen bekannt. Sie dienen zum einen dazu, in einer verriegelten Stellung mittels ihrer Blockiervorrichtung die Lenkspindel zu blockieren, sodass keine Lenkbewegungen möglich sind. Bei modernen Fahrzeugen gibt es auch Lenkradschlösser, die die Blockierung der Lenkspindel indirekt vorsehen, beispielsweise über eine elektrische Verriegelung, die direkt auf das Lenkgetriebe einwirkt. Zum anderen weisen moderne Lenkradschlösser aber auch zumindest einen elektrischen Schalter auf. Dieser wird häufig dazu verwendet, bereits beim Einstecken des Schlüssels in das Schloss gewisse Stromkreise des Kraftfahrzeugs mit Strom zu versorgen und diese erst wieder auszuschalten, wenn der Schlüssel gezogen wird. Solche elektrischen Schalter können z.B. dazu benutzt werden, die Stromversorgung für das Autoradio unabhängig von der Zündung des Kraftfahrzeugs an und aus zu schalten.

Aus der DE 102 62 210 B4 ist ein Lenkradschloss bekannt, bei der der elektrische Schalter in einer Art Verlängerung des Lenkradschlosses in Einsteckrichtung angeordnet ist. Bei dem dort gezeigten Lenkradschloss fallen Einsteckrichtung und Schaltrichtung somit zusammen. Der Nachteil hiervon ist eine relativ große Baulänge des Lenkradschlosses. Zudem besteht keine besonders große Flexibilität in der Art und Weise, wie dieses Lenkradschloss im Fahrzeug eingebaut werden kann.

In der DE 102 62 210 B4 wird ein Lenkradschloss mit den eingangs genannten Merkmalen beschrieben. Dieses umfasst einen elektrischen Schalter mit einem in einer zur Einsteckrichtung abgewinkelten Schaltrichtung beim Einstecken des Schlüssels verschiebbaren Schaltelement. Das Schaltelement wird über einen im Schließelement beweglich gelagerten Schiebezapfen betätigt, der beim Einstecken vom Schlüssel abgewinkelt zur Einsteckrichtung bewegt wird. Nachteilig daran ist, dass der Schiebezapfen ein zusätzliches beweglich gelagertes Bauteil bildet, welches zudem direkt vom Schlüssel betätigt wird, wodurch der Aufbau aufwendig und empfindlich ist.

Aufgabe der Erfindung ist es, ein Lenkradschloss der oben genannten Art dahingehend zu verbessern, dass die genannten Nachteile beseitigt sind.

Dies wird bei der Erfindung durch ein Lenkradschloss gemäß Patentanspruch 1 erreicht.

Demnach erfogt das Zusammenwirken des Betätigungselementes und des Schaltelements für einen Schaltkontakt des elektrischen Schalters über eine Schrägfläche. In diesem Sinne ist es bevorzugt vorgesehen, dass das Lenkradschloss ein, beim Einstecken des Schlüssels in die Schlüsselaufnahme zumindest auf Teilstrecken dieser Einsteckbewegung mit in der Einsteckrichtung mitbewegtes Betätigungselement aufweist, wobei das Betätigungselement über zumindest eine, schräg zur Einsteckrichtung und/oder zur Schaltrichtung angeordnete Schrägfläche auf das Schaltelement einwirkt. Schräg sind dabei alle Winkel, welche weder 0° noch ganzzahlige Vielfache von 90° sind. Die Schrägfläche muss dabei nicht eben ausgebildet sein. Sie kann auch als gewölbte konvexe oder konkave Fläche ausgebildet sein. Bevorzugte Ausgestaltungsformen der Erfindung sehen dabei vor, dass die Schrägfläche zumindest bereichsweise kegelmantelförmig ausgebildet ist. Dies ist besonders dann günstig, wenn der Schlüssel samt Schlüsselaufnahme im Lenkradschloss um die Einsteckrichtung herum gedreht wird, um die Blockiervorrichtung, die Zündung oder dergleichen zu betätigen. In der Regel ist dabei kein vollständiger Kegelmantel notwendig. Es reicht meist eine bereichsweise kegelmantelförmige Ausbildung der Schrägfläche. Auch die kegelmantelförmige Kontur kann dabei von der reinen Kegelform abweichen und eine gewölbte konkave oder konvexe Oberfläche aufweisen.

Der mit der Schrägfläche zusammenwirkende Kontaktbereich des Betätigungselementes oder des Schaltelements ist günstigerweise zumindest bereichsweise abgerundet ausgebildet. Grundsätzlich kann die Schrägfläche sowohl Teil des Betätigungselementes als auch Teil des Schaltelements sein. Bevorzugte Ausgestaltungsformen sehen jedoch vor, dass die Schrägfläche Teil des Betätigungselementes ist oder mit diesem in Einsteckrichtung zumindest mitbewegt wird. Bevorzugt ist es auch, wenn der Kontaktbereich Teil des Schaltelements ist oder mit diesem in Schaltrichtung zumindest mitbewegt wird. Das Schaltelement kann sehr unterschiedlich ausgestaltet sein. Eine stiftförmige Ausbildung des Schaltelementes ist bevorzugt. Bevorzugt ist auch, wenn die Einsteckrichtung und/oder die Schaltrichtung ausschließlich linear ausgebildet sind.
Gemäß der Erfindung ist vorgesehen, dass die Einsteckrichtung und die Schaltrichtung nicht mehr zusammenfallen bzw. nicht mehr in einem 0° Winkel und auch nicht mehr in einem ganzzahligen Vielfachen von 180° und auch nicht parallel zueinander angeordnet sind. Einsteckrichtung und Schaltrichtung liegen vielmehr abgewinkelt zueinander. Es kann sich dabei z.B. um einen spitzen Winkel kleiner 90° handeln. Besonders bevorzugte Ausgestaltungsformen sehen vor, dass die Einsteckrichtung und die Schaltrichtung orthogonal zueinander angeordnet sind.

Überraschenderweise hat sich herausgestellt, dass trotz der abgewinkelten Anordnung von Einsteckrichtung und Schaltrichtung ein problemloses Funktionieren des Lenkradschlosses ohne Verkanten oder Verklemmen möglich ist.

Durch die Erfindung wird insgesamt eine kürzere Baugröße des Lenkradschlosses möglich. Außerdem ist es auch möglich, das Lenkradschloss in relativ vielen voneinander verschiedenen Positionen und Ausrichtungen im Armaturenbrett oder direkt an der Lenksäule des Kraftfahrzeugs anzubringen.

Die Schlüsselaufnahme ist jedenfalls, wie an sich bekannt der Kanal, in den der Schlüssel in Einsteckrichtung eingesteckt wird. Es kann sich um verschiedenste Arten von Schlüsseln handeln. Geeignete Schlüssel können z.B., wie an sich bekannt, einen Bart aufweisen, wobei durch die individuelle Formgestaltung des Bartes eine individuelle Zugangskontrolle möglich ist, indem nur eine bestimmte Form des Bartes dazu geeignet ist, das Lenkradschloss zu schließen. Es sind beim Stand der Technik aber auch Lenkradschlösser bekannt, bei denen der Schlüssel gar keinen Bart mehr aufweist. Hier wird die Zugangskontrolle über elektronische Bauteile geregelt. Diese Schlüssel können meist ganz oder teilweise in eine entsprechende Schlüsselaufnahme des Lenkradschlosses eingeschoben werden. Auch erfindungsgemäße Lenkradschlösser sind für die Auslegung für solche Schlüssel geeignet.

Erfindungsgemäße Lenkradschlösser ermöglichen es, dass bei bereits in die Schlüsselaufnahme eingestecktem Schlüssel, welcher aber noch nicht die Zündung oder die Blockiervorrichtung betätigt hat, der elektrische Schalter bereits geschaltet ist. Hiermit können vor dem eigentlichen Start des Kraftfahrzeugs und auch nach dem Ausschalten des Motors elektrische Schaltkreise aktiviert werden oder aktiviert bleiben, ohne dass der Motor läuft bzw. die Zündung angeschaltet ist und auch ohne dass die Blockiervorrichtung die Lenkspindel freigibt. Mit solchen Stromkreisen kann z.B. das Radio bereits in Betrieb genommen werden, obwohl der Motor noch nicht läuft bzw. die Zündung noch nicht eingeschaltet ist. Die Erfindung kann auch dazu benutzt werden, ein Autoradio noch weiter laufen zu lassen, obwohl der Motor bzw. die Zündung schon ausgeschaltet ist. Das Radio wird dann erst beim Herausziehen des Schlüssels aus der Schlüsselaufnahme mittels des elektrischen Schalters abgeschaltet. Die Blockiervorrichtung kann durch Drehen des in die Schlüsselaufnahme eingesteckten Schlüssels um die Einsteckrichtung herum betätigt werden, um die Lenkspindel zu blockieren oder diese Blockierung aufzuheben.
Es kann aber auch vorgesehen sein, dass das Umstellen der Blockiervorrichtung zwischen seiner Blockadestellung und seiner Freigabestellung durch Bewegung des Schlüssels in Einsteckrichtung oder zumindest parallel zur Einsteckrichtung erfolgt. Das Gleiche gilt für das An- und Abschalten der Zündung und das Starten bzw. Abschalten des Motors. Vor allem ist aber darauf hinzuweisen, dass die Blockiervorrichtung nicht zwingend rein mechanisch bzw. direkt auf die Lenkspindel einwirkend ausgebildet sein muss. Es ist auch denkbar und möglich, das Umstellen der Blockiervorrichtung zwischen seiner Blockadestellung und seiner Freigabestellung und umgekehrt auf elektrischem Wege oder anderweitig indirekt bzw. unter Zwischenschaltung weiterer Bauteile oder Aktuatoren darzustellen, z. B. auch durch direktes Einwirken auf das Lenkgetriebe. Dabei können auch zusätzliche elektrische Schaltfunktionen, wie beispielsweise das Starten des Fahrzeuges realisiert werden.

Für die Frage, wie die Blockiervorrichtung ausgebildet ist, gibt es verschiedenste Möglichkeiten. Bevorzugte Varianten sehen vor, dass ein Blockierbolzen der Blockiervorrichtung so verschiebbar ist, dass er in einer Eingriffsstellung in die Lenkspindel formschlüssig eingreift und in einer Freigabestellung die Lenkspindel freigibt. Besonders bevorzugte Varianten der Erfindung sehen in diesem Zusammenhang vor, dass die Blockiervorrichtung zum Blockieren der Lenkspindel zumindest einen, mittels eines drehbar gelagerten Nockens verschiebbaren Blockierbolzen zum Eingriff in die Lenkspindel aufweist. Natürlich sind auch reibschlüssig funktionierende Blockiervorrichtungen möglich.

Ein erfindungsgemäßes Ausführungsbeispiel ist zur Illustration der Erfindung in der nachfolgenden Figurenbeschreibung ausgeführt. Es zeigen:
Fig. 1 das Lenkradschloss bevor der Schlüssel in die Schlüsselaufnahme eingeführt wird;
Fig. 1a den Bereich A aus Fig. 1 vergrößert;
Fig. 2 das Lenkradschloss gemäß Fig. 1 mit eingesteckten aber noch nicht gedrehtem Schlüssel;
Fig. 2a den Bereich B aus Fig. 2;
Fig. 3 das Lenkradschloss nach Betätigung der Blockiervorrichtung;
Fig. 4 die Stellung des Blockierbolzens dieses Ausführungsbeispiels in der Blockierstellung der Blockiervorrichtung und
Fig. 5 den Blockierbolzen in der Freigabestellung.

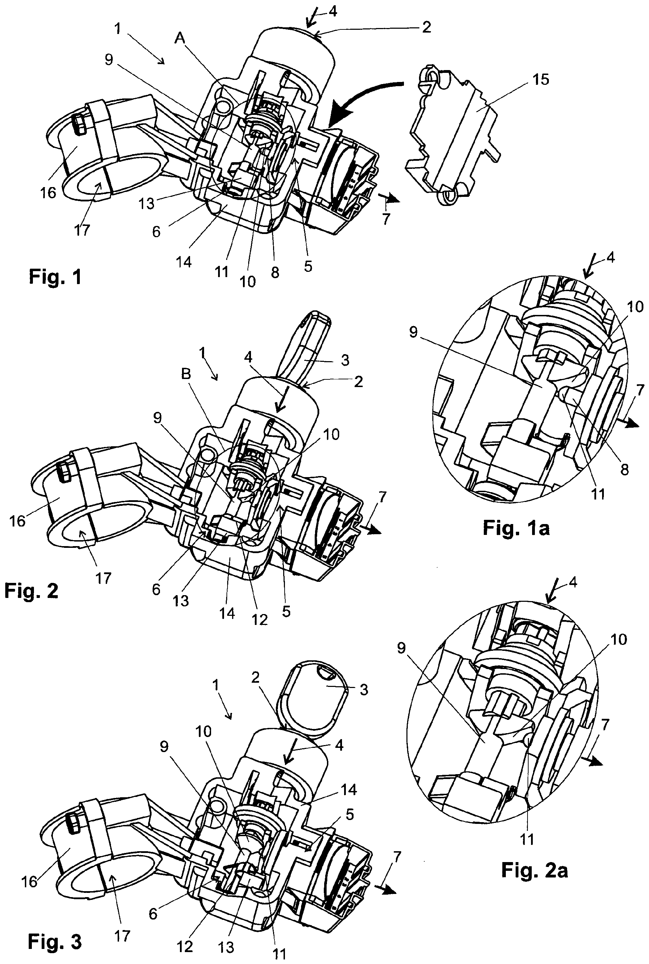

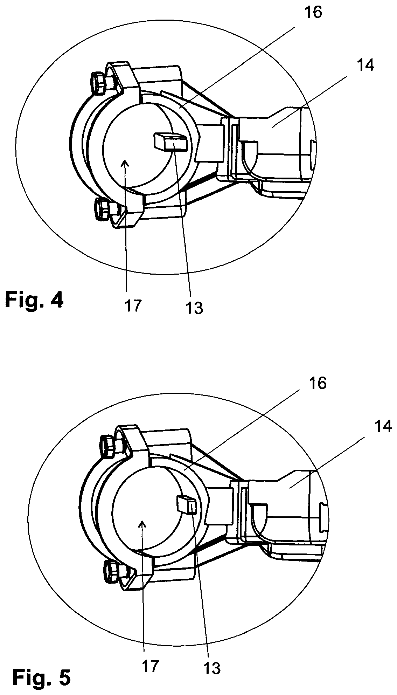

Das hier dargestellte Lenkradschloss 1 weist ein Gehäuse 14 auf, dessen Deckel 15 in allen Figuren abgenommen ist, damit man in das Innere des Lenkradschlosses 1 hineinblicken kann. Die Schlüsselaufnahme 2 ist in allen Figuren verdeckt und nicht unmittelbar sichtbar, ist aber, angepasst an den jeweiligen Schlüssel, wie beim Stand der Technik bekannt, ausgeführt. Der Schlüssel 3 kann jedenfalls in Einsteckrichtung 4 in die Schlüsselaufnahme 2 eingeschoben werden. In Fig. 1 ist der Schlüssel noch nicht in die Schlüsselaufnahme 2 eingeschoben. Das Schaltelement 8 ist entgegen der Schaltrichtung 7 noch in seiner maximal ausgefahrenen Stellung aus dem elektrischen Schalter 5 herausgetreten, so dass der Schaltkontakt noch nicht geschlossen ist. In dieser Stellung kann z.B. vorgesehen sein, dass alle Stromkreise unterbrochen sind. Der Blockierbolzen 13 der Blockiervorrichtung 6 befindet sich in dieser Stellung in seiner in Fig. 4 dargestellten Blockierstellung, in der er in die hier nicht dargestellte, durch die Durchführöffnung 17 der Schelle 16 hindurchgeführte Lenkspindel eingreift und so verhindert, dass an der Lenkspindel bzw. am Lenkrad eine Lenkbewegung durchgeführt werden kann. Wird nun der Schlüssel 3 in die Schlüsselaufnahme 2 in Einsteckrichtung 4 eingeschoben, so wird hierdurch das Betätigungselement 9, welches in diesem Ausführungsbeispiel eine kegelförmige Schrägfläche 10 trägt, samt der Schrägfläche 10 in Einsteckrichtung 4 ein Stück weit mit verschoben. Dies erfolgt günstigerweise immer dann, wenn der Schlüssel auf seinem ersten Teilweg in die Schlüsselaufnahme 2 eingeschoben wird. An der Schrägfläche 10 liegt der abgerundete Kontaktbereich 11 des hier stiftförmig ausgebildeten Schaltelements 8 an. Durch das Verschieben der Schrägfläche 10 in Einsteckrichtung 4 wird das Schaltelement 8in Schaltrichtung 7 bewegt (vergleiche Fig. 1 und 1a mit 2 und 2a), wodurch der elektrische Schalter 5 z.B. die dazu vorgesehenen Stromkreise anschaltet. Es kann sich hier z.B. um einen Stromkreis für das Radio oder andere Komfortfunktionen des Kraftfahrzeugs handeln. Das Zusammenwirken von Schrägfläche 10 und Kontaktbereich 11 ist besonders gut in den vergrößerten Darstellungen der Fig. 1a und 2a zu sehen. Natürlich könnte der Kontaktbereich 11 statt einer Abrundung auch eine Schrägfläche aufweisen. Es könnte auch vorgesehen sein, dass die Schrägfläche am Schaltelement 8 und der Kontaktbereich 11 am Betätigungselement 9 angeordnet sind oder zumindest mit diesen in die jeweiligen Bewegungsrichtungen 4 und 7 mitbewegt werden. Dies sind natürlich nur einige mögliche Variationen der Erfindung gegenüber dem hier dargestellten Ausführungsbeispiel. Ist, wie in Fig. 2 dargestellt, der Schlüssel 3 dann vollständig in die Schlüsselaufnahme 2 eingeschoben aber noch nicht um die Einsteckrichtung 4 gedreht, so sind zwar durch den elektrischen Schalter 5 schon die gewünschten Stromkreise bestromt, die Bockiervorrichtung 6 befindet sich aber noch in ihrer Blockierstellung. Wird im gezeigten Ausführungsbeispiel nun der Schlüssel 3 aus der Stellung gemäß Fig. 2 in die Stellung gemäß Fig. 3 um die Einsteckrichtung 4 herum gedreht, so wird die Blockiervorrichtung 6 im gezeigten Ausführungsbeispiel aus ihrer Blockierstellung in ihre Freigabestellung gebracht. In der Freigabestellung ist der Blockierbolzen 13, wie in Fig. 5 zu sehen, zurückgezogen. In dieser Freigabestellung steht er außer Eingriff mit der hier nicht dargestellten, durch die Durchführöffnung 17 der Schelle 16 hindurchgeführten Lenkspindel. Bei dieser Freigabestellung kann dann die Lenkspindel zur Durchführung von Lenkbewegungen um ihre Längsachse gedreht werden.

Zur Betätigung des Blockierbolzens 13 ist im gezeigten Ausführungsbeispiel ein über das Betätigungselement 9 mit dem Schlüssel 3 mitdrehender Nocken 12 realisiert, welcher den Blockierbolzen 13 zwischen der Blockierstellung gemäß den Fig. 2 und 4 und der Freigabestellung gemäß der Fig. 3 und 5 je nach Drehrichtung des Schlüssels hin und her verschiebt. Natürlich kann die Blockiervorrichtung 6 auch ganz anders realisiert sein. Es muss noch nicht einmal vorgesehen sein, dass ein Verdrehen des Schlüssels 3 um die Einsteckrichtung 4 notwendig ist, um die Blockiervorrichtung 6 zu betätigen. Es ist auch denkbar, die Blockiervorrichtung 6 durch eine Schiebebewegung des Schlüssels 3 in oder entgegen Einsteckrichtung 4 zu betätigen.

Bei der Verdrehung des Schlüssels 3 um die Einsteckrichtung 4 von der Blockierstellung gemäß Fig. 2 und 4 in Richtung der Freigabestellung gemäß der Fig. 3 und 5 kann das Schaltelement 8 noch weiter in die Schaltrichtung 7 verschoben werden, so dass weitere Schaltfunktionen im elektrischen Schalter 5 realisiert werden können. Hierzu wird, für diesen Fall, die Schrägfläche 10 zusätzlich von einer Nockenkontur überlagert, die diesen Hub bei der Verdrehung des Schlüssels 3 aufbringt. Die Schrägfläche ist dann nicht konisch sondern spiralförmig ausgebildet.

Mit Vorteil ist die Schrägfläche, die im Querschnitt zur Einsteckrichtung 4 gesehen im Wesentlichen etwa entlang der Winkelhalbierenden zwischen Einsteckrichtung 4 und Schaltrichtung 7 verläuft, aus gehärtetem Stahl oder mit einer Keramikbeschichtung oder aus Keramik gebildet. Der Kontaktbereich 11 des Schaltelements 8 ist bevorzugt aus gehärtetem Stahl oder einer Keramikbeschichtung gebildet. Das Kontaktelement kann bevorzugt mit einer DLC- oder ADLC-Schicht beschichtet sein.

Das Kontaktelement 8 wird bevorzugt mit einer Feder in Richtung der Schrägfläche 10 vorgespannt, wobei mit Vorzug der letzte Öffnungshub in Schaltrichtung 7 mit zumindest geringerer oder ganz ohne Vorspannung ausgebildet ist. Die Federspannung und der Federweg also gerade ausreicht, den Schaltkontakt im elektrischen Schalter 5 zu öffnen. Mit Vorzug ist auf der Schrägfläche 10 eine Oberflächenkontur ausgebildet, die teilweise wellenförmig ist, so dass das Schaltelement unmittelbar zu Beginn der Bewegung des Schaltelements 8 in Schaltrichtung 7 einer geringfügigen Hin- und Herbewegung in Schaltrichtung 7 ausgesetzt ist, um die anfängliche Haftreibung besser zu überwinden.

Denkbar und möglich ist es, in die Bewegung des Schlüssels 3 in Einsteckrichtung 4 einzelne Widerstände einzubauen, so dass ein vollständig gleichmäßiges Einschieben des Schlüssel 3 erschwert ist. Durch diese Ungleichmäßigkeiten wird das Schaltelement 8 ungleichmäßig in Schaltrichtung 7 bewegt, wodurch eine Neigung zum Verklemmen reduziert wird. Es ist dabei denkbar und möglich, die Wellenform in der Schrägfläche mit der Ausbildung von Widerständen zu kombinieren.

Der Vollständigkeit halber sei noch darauf hingewiesen, dass auch das Einschalten und Ausschalten der Zündung mittels Schlüssel 3 und Lenkradschloss 1 z.B. sowohl durch Drehen des Schlüssels 3 um die Einsteckrichtung 4 als auch durch Einschieben des Schlüssels 3 in Einsteck- oder entgegen der Einsteckrichtung 4 realisiert werden kann. Dies muss nicht näher erläutert werden, da dies beim Stand der Technik bekannt ist.

### Legende

### zu den Hinweisziffern:

- 1: Lenkradschloss
- 2: Schlüsselaufnahme
- 3: Schlüssel
- 4: Einsteckrichtung
- 5: elektrischer Schalter
- 6: Blockiervorrichtung
- 7: Schaltrichtung
- 8: Schaltelement
- 9: Betätigungselement
- 10: Schrägfläche
- 11: Kontaktbereich
- 12: Nocken
- 13: Blockierbolzen
- 14: Gehäuse
- 15: Deckel
- 16: Schelle
- 17: Durchführöffnung

## Patentansprüche

1. Lenkradschloss (1) mit einer Schlüsselaufnahme (2), in die ein Schlüssel (3) in einer Einsteckrichtung (4) einsteckbar ist, und mit zumindest einem, durch Einstecken des Schlüssels (3) in der Einsteckrichtung (4) in die Schlüsselaufnahme (2) betätigbaren elektrischen Schalter (5) und mit zumindest einer, mittels des in die Schlüsselaufnahme (2) eingesteckten Schlüssels (3) betätigbaren Blockiervorrichtung (6) zum Blockieren einer Lenkspindel, wobei der elektrische Schalter (5) ein in zumindest einer Schaltrichtung (7) verschiebbares Schaltelement (8) aufweist, wobei die Einsteckrichtung (4) und die Schaltrichtung (7) abgewinkelt zueinander angeordnet sind,
**dadurch gekennzeichnet,**
**dass** das Lenkradschloss (1) zumindest ein, beim Einstecken des Schlüssels (3) in die Schlüsselaufnahme (2) zumindest auf Teilstrecken dieser Einsteckbewegung mit in der Einsteckrichtung (4) mitbewegtes Betätigungselement (9) aufweist, wobei das Betätigungselement (9) über zumindest eine, schräg zur Einsteckrichtung (4) und/oder zur Schaltrichtung (7) angeordnete Schrägfläche (10) auf das Schaltelement (8) einwirkt.

2. Lenkradschloss (1) nach Anspruch 1, **dadurch gekennzeichnet, dass** die Einsteckrichtung (4) und die Schaltrichtung (7) orthogonal zueinander angeordnet sind.

3. Lenkradschloss (1) nach Anspruch 1, **dadurch gekennzeichnet, dass** die Schrägfläche (10) zumindest bereichsweise kegelmantelförmig ausgebildet ist.

4. Lenkradschloss (1) nach Anspruch 1 oder 3, **dadurch gekennzeichnet, dass** ein mit der Schrägfläche (10) zusammenwirkender Kontaktbereich (11) des Betätigungselementes (9) oder des Schaltelements (8) zumindest bereichsweise abgerundet ausgebildet ist.

5. Lenkradschloss (1) nach Anspruch 3 oder 4, **dadurch gekennzeichnet, dass** die Schrägfläche (10) Teil des Betätigungselementes (9) ist oder mit diesem in Einsteckrichtung (4) zumindest mitbewegt ist.

6. Lenkradschloss (1) nach Anspruch 4 oder 5, **dadurch gekennzeichnet, dass** der Kontaktbereich (11) Teil des Schaltelements (8) ist oder mit diesem in Schaltrichtung (7) zumindest mitbewegt ist.

7. Lenkradschloss (1) nach einem der Ansprüche 1 bis 6, **dadurch gekennzeichnet, dass** das Schaltelement (8) stiftförmig ausgebildet ist.

8. Lenkradschloss (1) nach einem der Ansprüche 1 bis 7, **dadurch gekennzeichnet, dass** die Einsteckrichtung (4) und/oder die Schaltrichtung (7) ausschließlich linear ausgebildet ist bzw. sind.

9. Lenkradschloss (1) nach einem der Ansprüche 1 bis 8, **dadurch gekennzeichnet, dass** die Blockiervorrichtung (6) zum Blockieren der Lenkspindel zumindest einen, mittels eines drehbar gelagerten Nockens (12) verschiebbaren Blockierbolzen (13) zum Eingriff in die Lenkspindel aufweist.

## Claims

1. Steering-wheel lock (1) with a key receptacle (2) into which a key (3) can be inserted in an insertion direction (4), and with at least one electrical switch (5) which can be actuated by insertion of the key (3) into the key receptacle (2) in the insertion direction (4), and with at least one blocking device (6), which can be actuated by means of the key (3) inserted into the key receptacle (2), for blocking a steering spindle, wherein the electrical switch (5) exhibits a switching element (8) which is displaceable in at least one switching direction (7), wherein the insertion direction (4) and the switching direction (7) are angled in relation to one another,
**characterized in that**
the steering-wheel lock (1) exhibits at least one actuating element (9) which is moved jointly in the insertion direction (4) when the key (3) is inserted into the key receptacle (2), at least on sections of this insertion movement, wherein the actuating element (9) acts on the switching element (8) via at least one inclined surface (10) arranged obliquely in relation to the insertion direction (4) and/or in relation to the switching direction (7).

2. Steering-wheel lock (1) according to Claim 1, **characterized in that** the insertion direction (4) and the switching direction (7) are arranged orthogonally in relation to one another.

3. Steering-wheel lock (1) according to Claim 1, **characterized in that** the inclined surface (10) is formed as a conical shell at least in some regions.

4. Steering-wheel lock (1) according to Claim 1 or 3, **characterized in that** a contact region (11), interacting with the inclined surface (10), of the actuating element (9) or of the switching element (8) is rounded at least in some regions.

5. Steering-wheel lock (1) according to Claim 3 or 4, **characterized in that** the inclined surface (10) is part of the actuating element (9) or is at least moved jointly with the latter in the insertion direction (4).

6. Steering-wheel lock (1) according to Claim 4 or 5, **characterized in that** the contact region (11) is part of the switching element (8) or is at least moved jointly with the latter in the switching direction (7).

7. Steering-wheel lock (1) according to one of Claims 1 to 6, **characterized in that** the switching element (8) is pin-shaped.

8. Steering-wheel lock (1) according to one of Claims 1 to 7, **characterized in that** the insertion direction (4) and/or the switching direction (7) are designed to be exclusively linear.

9. Steering-wheel lock (1) according to one of Claims 1 to 8, **characterized in that** the blocking device (6) for blocking the steering spindle exhibits at least one blocking bolt (13), which is displaceable by means of a cam (12) which is supported to be rotatable, for engaging into the steering spindle.

## Revendications

1. Antivol de direction (1) comprenant un logement de clé (2) dans lequel une clé (3) peut être insérée dans une direction d'insertion (4) et comprenant au moins un commutateur électrique (5) pouvant être actionné par l'insertion de la clé (3) dans la direction d'insertion (4) dans le logement de clé (2) et au moins un dispositif de blocage (6) pouvant être actionné au moyen de la clé (3) insérée dans le logement de clé (2), pour bloquer un arbre de direction, le commutateur électrique (5) présentant un élément de commutation (8) pouvant être déplacé dans au moins une direction de commutation (7), la direction d'insertion (4) et la direction de commutation (7) étant orientées suivant un certain angle l'une par rapport à l'autre,
**caractérisé en ce que**
l'antivol de direction (1) présente au moins un élément d'actionnement (9) entraîné dans la direction d'insertion (4) lors de l'insertion de la clé (3) dans le logement de clé (2) sur au moins des sections partielles de ce mouvement d'insertion, l'élément d'actionnement (9) agissant sur l'élément de commutation (8) par le biais d'au moins une surface oblique (10) disposée obliquement par rapport à la direction d'insertion (4) et/ou par rapport à la direction de commutation (7).

2. Antivol de direction (1) selon la revendication 1, **caractérisé en ce que** la direction d'insertion (4) et la direction de commutation (7) sont disposées perpendiculairement l'une à l'autre.

3. Antivol de direction (1) selon la revendication 1, **caractérisé en ce que** la surface oblique (10) est réalisée au moins en partie en forme d'enveloppe conique.

4. Antivol de direction (1) selon la revendication 1 ou 3, **caractérisé en ce qu'**une région de contact (11) de l'élément d'actionnement (9) ou de l'élément de commutation (8), coopérant avec la surface oblique (10), est réalisée sous forme arrondie au moins en partie.

5. Antivol de direction (1) selon la revendication 3 ou 4, **caractérisé en ce que** la surface oblique (10) fait partie de l'élément d'actionnement (9) ou est au moins entraînée avec celui-ci dans la direction d'insertion (4).

6. Antivol de direction (1) selon la revendication 4 ou 5, **caractérisé en ce que** la région de contact (11) fait partie de l'élément de commutation (8) ou est au moins entraînée avec celui-ci dans la direction de commutation (7).

7. Antivol de direction (1) selon l'une quelconque des revendications 1 à 6, **caractérisé en ce que** l'élément de commutation (8) est réalisé en forme de goupille.

8. Antivol de direction (1) selon l'une quelconque des revendications 1 à 7, **caractérisé en ce que** la direction d'insertion (4) et/ou la direction de commutation (7) est/sont réalisées exclusivement sous forme linéaire.

9. Antivol de direction (1) selon l'une quelconque des revendications 1 à 8, **caractérisé en ce que** le dispositif de blocage (6) pour bloquer l'arbre de direction présente au moins un boulon de blocage (13) pouvant être déplacé au moyen d'une came (12) supportée à rotation, pour l'engagement dans l'arbre de direction.
